# EUROPÄISCHE PATENTSCHRIFT

(11) **EP 1 393 273 B1**
(45) Veröffentlichungstag und Bekanntmachung des Hinweises auf die Patenterteilung: **28.04.2010**
(21) Anmeldenummer: 02754585.4
(22) Anmeldetag: 25.05.2002
(51) Int. Cl.: G07F 19/00

(54) **ZAHLUNGSSYSTEM UND VERFAHREN ZUR ABWICKLUNG BARGELDLOSEN ZAHLUNGSVERKEHRS**
PAYMENT SYSTEM AND METHOD FOR PROCESSING CASHLESS TRANSACTIONS
SYSTEME DE PAIEMENT ET PROCEDE DE REALISATION DE TRANSACTIONS PAR CHEQUE ET VIREMENT

(30) Priorität: 28.05.2001 DE 10126028; 19.06.2001 DE 10129561
(43) Veröffentlichungstag der Anmeldung: 03.03.2004
(73) Patentinhaber: maxchoice international SL, 38400 Puerto de la Cruz, Tenerife (ES)
(72) Erfinder: Rasch, Helmut, 50321 Brühl (DE)
(74) Vertreter: Althaus, Arndt
(86) Internationale Anmeldenummer: PCT/EP2002/005724
(87) Internationale Veröffentlichungsnummer: WO 2002/097745

(56) Entgegenhaltungen:
- WO-A-00/39657
- WO-A-01/88863
- WO-A-98/39742
- WO-A-99/30256
- US-A- 5 192 854
- US-A- 5 822 735
- US-A- 5 855 007
- US-A- 6 041 309

## Beschreibung

Die Erfindung betrifft ein Zahlungssystem für bargeldlosen Zahlungsverkehr mit Zahlungssurrogaten und Verfahren, zur Abwicklung des bargeldlosen Zahlungsverkehrs. Die Erfindung betrifft hierbei sowohl ein Zahlungssystem und Zahlungsabwicklungsverfahren für bargeldlosen Zahlungsverkehr mit im wesentlichen bankspezifischen Zahlungsaurrogaten wie Überbringer-, Order- oder neutrale Schecks, Überweisungs- oder Zahlscheinformularen, Wechsel, Aktienurkunden, die Banken und Kreditinstitute an ihre Privat- und Geschäftskunden ausgeben, als auch ein Zahlungssystem und Zahlungsabwicklungsverfahren fürGutscheine, insbesondere Wert-, Sach- oder Dienstleistungsgutscheine, oder Schecks wie Reiseschecks und Wertschecks.

Die gattungsgemäßen, derzeit eingesetzten bargeldlosen Zahlungssysteme mit im wesentlichen bankspezifischen Zahlungssurrogaten umfassen folgende Komponenten:
a) Zahlungssurrogatträger, die jeder u.a. unveränderlich mit wenigstens einem lesbaren Identifizierungscode versehen, insbesondere bedruckt sind,
b) eine Datenverarbeitungsanlage mit einem Datenspeicher, in dem u.a. Daten für jeden Zahlungssurrogatträger einschließlich des/der zugehörigen Identifizierungscodes gespeichert sind,
c) einen Emittenten, der die Zahlungssurrogatträger und die Datenverarbeitungsanlage bereitstellt,
d) Abnehmern, die die Zahlungssurrogatträger von dem Emittenten erhalten, und
e) Akzeptanzstellen, bei denen die Zahlungssurrogatträger einlösbar sind.

Trotz der hohen Verbreitung der bankenspezifischen Zahlungssurrogate wie neutrale Schecks, Orderschecks, Euroschecks und dgl. ist der Mißbrauch durch Fälschungen, Diebstahl etc. hoch. Zwar versuchen die Emittenten (Banken) der Schecks, diese mit fälschungs-, insbesondere kopiersicheren Merkmalen zu versehen, um Mißbrauch vorzubeugen. Diese Sicherungsmaßnahmen erschweren jedoch nur das Anfertigen von Fälschungen; sie reichen nicht aus, einen geplanten Betrug zu verhindern. Auch bei den heutzutage weit verbreiteten Euroschecks und EC-Karten kann nach einem Diebstahl ein immenser wirtschaftlicher Schaden drohen, da sich die Akzeptanzstellen häufig nicht an die für derartige Schecks vorgegebenen Höchstbeträge, bis zu denen eine Deckung der ausgezahlten Summe durch die emittierende Bank gesichert ist, halten. Als Sicherheitsmerkmal dient bei den Eurocheques bisher die Unterschrift, die insbesondere nach einem Diebstahl von Schecks und Personalpapieren leicht gefälscht werden kann.

Gattungsgemäße Zahlungssysteme für bargeldlosen Zahlungsverkehr mit Zahlungssurrogaten, insbesondere mit Gutscheinen, Wert-, Sach- oder Dienstleistungsgutscheinen, oder Schecks wie Reiseschecks, Wertschecks u.dgl. sind bekannt und werden z.B. im Bereich von Restaurantschecks, von Euroschecks, Geschenkgutscheinen von Warenkaufhäusern, Firmen, Behörden u.dgl. eingesetzt. Die gattungsgemäßen, derzeit eingesetzten bargeldlosen Zahlungssysteme mit derartigen Zahlungssurrogaten umfassen folgende Komponenten:
A) Datenspeicherlose, d.h. chip- und magnetstreifenfreie, die Gutscheine oder Schecks bildende Zahlungssurrogatträger, die jeder unveränderlich mit einer Information über den Wert bzw. die ausgelobte Leistung und mit einem lesbaren Identifizierungscode versehen, insbesondere bedruckt sind;
B) eine Datenverarbeitungsanlage mit einem Datenspeicher, in dem u.a. Daten für jeden Zahlungssurrogatträger einschließlich des zugehörigen Identifizierungscodes gespeichert sind;
C) einem Emittenten, der die Zahlungssurrogatträger und die Datenverarbeitungsanlage bereitstellt;
D) Abnehmerstellen, die die Zahlungssurrogatträger von dem Emmittenten erhalten und an Kunden, Mitarbeiter od.dgl. ausgeben bzw. selbst verwenden, und
E) Akzeptanzstellen, bei denen die Zahlungssurrogatträger gegen die ausgelobte Leistung oder den angegebenen Wert einlösbar sind.

Im Handel wird mittlerweile ein hoher prozentualer Anteil des Gesamtumsatzes über Zahlungssurrogate getätigt. Restaurantschecks haben sich vor allem aus steuerlichen Aspekten durchgesetzt, da Unternehmen, die selbst über keine Kantine verfügen, die steuerfreie Zuzahlung des Arbeitgeberanteils und den vom Arbeitnehmer zu tragenden Eigenanteil in den Wert des Zahlungssurrogatträgers einbinden können. Geschenkgutscheine für bestimmte Warenkaufhäuser mit einem festgelegten Wert helfen, kostenverursachende Umtauschvorgänge zu minimieren.

Trotz der hohen Verbreitung der Zahlungssurrogate bzw. Zahlungssurrogatträger ist der Mißbrauch durch Fälschungen, Diebstahl etc. hoch. Zwar versuchen auch hier die Emittenten der Zahlungssurrogatträger, diese mit fälschungs-, insbesondere kopiersicheren Merkmalen zu versehen, um Fälschungen, die z.B. auf Farbkopierern hergestellt werden, vorzubeugen. Diese Sicherungsmaßnahmen erschweren jedoch nur das Anfertigen von Fälschungen; sie reichen nicht aus, einen geplanten Mißbrauch zu verhindern, obwohl gerade ein derartiger, starker Mißbrauch in kurzen Zeitabständen den wirtschaftlichen Ruin einzelner Akzeptanzstellen bedeuten kann. Ein ähnliches wirtschaftliches Risiko besteht auch bei den heutzutage weit verbreiteten Euroschecks und EC-Karten, da auch hier insbesondere nach Diebstahl ein immenser wirtschaftlicher Schaden drohen kann.

Aus der US 5,855,007 ist ein System für elektronische Rabattcoupons bekannt, bei welchem ein Abnehmer über das Internet Rabattcoupons erstellen und ausdrucken kann. Das System dient vorrangig der Erforschung des Abnehmerverhaltens und des Erfolges der eingesetzten Werbung, wozu jeder Coupon mit einer Identifizierungsnummer versehen wird, über die das Kundenverhalten ausgeforscht werden kann, wenn der Coupon eingelöst wird.

Aus der WO 98/39742 ist ein System bekannt, bei welchem ein Kunde Travellerschecks an seinem eigenen Rechner erstellen kann. Hierzu erhält der Abnehmer eine Software und einen Autorisierungscode, mit dem er sich in das System einloggen kann. Nach Erstellten des Schecks wird jedem Scheck ein Identifizierungscode zugeordnet, der vor dem Einlesen abgefragt wird. Bei dieser Abfrage erfolgt auch eine Überprüfung, ob der Scheck den Status nicht eingelöst" oder "eingelöst" im Datensatz der Datenbearbeitungsanlage hat.

Aufgabe der Erfindung ist es, die derzeitigen Kreisläufe von Zahlungssystemen mit Zahlungssurrogatträgern zu optimieren und insbesondere gegen Betrug und Mißbrauch z.B. durch Diebstahl oder Fälschungen abzusichern.

Diese Aufgabe wird hinsichtlich des Zahlungssystems durch die in Patentanspruch 1 und hinsichtlich des Verfahrens durch die in Patentanspruch 15 angegebene Erfindung gelöst. Bei einem bankspezifischen Zahlungssystem ist erfindungsgemäß ein mehrstufiges, mittels Datentransfer via Kommunikationseinrichtungen zwischen Abnehmer und Datenverarbeitungsanlage bzw. Emittenten sowie Akzeptanzstelle und Datenverarbeitungsanlage bzw. Emittenten bewirktes Sicherheitssystem, basierend auf wenigstens einer von dem Abnehmer vorzunehmenden irreversiblen Statusänderung für jeden Zahlungssurrogatträger zur Freigabe des Zahlungssurrogatträgers für ein Einlösen vorgesehen, wobei vor jeder Statusänderung eine Überprüfung eines vom Emittenten an Abnehmer sowie Akzeptanzstelle ausgegebenen Autorisierungscodes erfolgt und Voraussetzung für ein Einlösen des Zahlungssurrogatträgers bei der Akzeptanzstelle eine von der Datenverarbeitungsanlage bzw. vom Emittenten via Kommunikationseinrichtung an die Akzeptanzstelle ausgegebene Freigabebestätigung ist. Bei dem erfindungsgemäßen Zahlungssystem ist mithin jeder Zahlungssurrogatträger aufgrund des z.B. aufgedruckten Identifizierungscodes eindeutig identifizierbar und in der zentralen Datenverarbeitungsanlage über einen für jeden Zahlungssurrogatträger angelegten Datensatz auf seinen aktuellen Status überprüfbar. Mit der ersten Statusänderung für den Zahlungssurrogatträger in dem zugehörigen Datensatz wird einem Mißbrauch durch Diebstahl, Fälschungen der Zahlungssurrogatträger beim Abnehmer, ggf. auch beim Emittenten, vorgebeugt, da erst nach erfolgter erster Statusänderung überhaupt ein Einlösen des Zahlungssurrogatträgers möglich ist. Da die Akzeptanzstelle vor Einlösen des Zahlungssurrogatträgers eine Freigabebestätigung erhält, mit der von der Datenverarbeitungsanlage bzw. vom Emittenten bestätigt wird, daß der Zahlungssurrogatträger mit dem entsprechenden Identifizierungscode im System eingetragen und zur Einlösung freigegeben ist, besteht für die Akzeptanzstelle höchstmögliche Sicherheit, daß es sich bei dem Zahlungssurrogatträger nicht um eine Fälschung oder einen gestohlenen Scheck bzw. eine gestohlene Urkunde handelt.

Bei den Zahlungssurrogatträger kann es sich um neutrale Schecks o.dgl., handeln die vom Emittenten ohne Information über ihren Wert ausgegeben werden und ein Schriftfeld aufweisen, in das der Wert vor dem Einlösen eintragbar ist, wobei vorzugsweise weitere Angaben wie Bankleitzahl, Kontonummer u.dgl. auf dem Scheck angegeben sind und/oder die Schecks datenspeicherlos sind. Derartige Schecks werden mithin vom Abnehmer meist unmittelbar vor dem Einlösen über eine bestimmte Summe ausgestellt oder die Summe wird von der Kasse des Akzeptanzpartners eingedruckt, nachdem dieser die Freigabebestätigung erhalten und der Abnehmer den Scheck freigeschaltet hat. Bei einer besonders vorteilhaften Ausgestaltung des Zahlungssystems ist Voraussetzung für die Freigabebestätigung einerseits die Gültigkeit der Statusänderungen des Zahlungssurrogatträgers in der Datenverarbeitungsanlage und andererseits eine Bonitätsprüfung, mit der z.B. die Kreditlinie des Abnehmers überprüfbar ist. Die Bonitätsprüfung kann beispielsweise bei Überschreiten einer vom Emittenten festlegbaren Summe, über die der Zahlungssurrogatträger ausgestellt ist, erfolgen. Die Bonitätsprüfung, die zusätzlich zu der eigentlichen Überprüfung im Sicherheitssystem stattfindet und im Hintergrund durch Zugriff auf z.B. ein bankeninternes Kundensystem ablaufen kann, bietet sowohl den emittierenden Banken als auch den Akzeptanzstellen Gewißheit, daß der Abnehmer bzw. Kunde über die Summe, über die der Scheck ausgestellt ist, verfügt oder verfügen darf bzw. sein Überziehungskredit für diese Summe ausreicht. Die bisher für Euroschecks vorgegebenen Höchstbeträge können dann entfallen.

Bei einem Zahlungssystem mit Gutscheinen, Schecks, Sonderschecks, Bankschecks etc. ist erfindungsgemäß ein mehrstufiges, mittels Datentransfer via Kommunikationseinrichtung zwischen Abnehmerstelle, Kunde oder Akzeptanzstelle und Datenverarbeitungsanlage bzw. Emittenten bewirktes Sicherheitssystem, basierend auf einer mehrfachen irreversiblen Statusänderung für jeden vom Emittenten herausgegebenen Zahlungssurrogatträger, vorgesehen, wobei das Sicherheitssystem eine von der Abnehmerstelle oder dem Kunden vorzunehmende Statusänderung zur Freigabe des Zahlungssurrogatträgers für ein Einlösen und eine von der Akzeptanzstelle vorzunehmende letzte Statusänderung zur Bestätigung des Einlösens des Zahlungssurrogatträgers und Sperren eines erneuten Einlösens umfaßt, wobei vor jeder Statusänderung eine Überprüfung eines vom Emittenten an Abnehmerstelle und Akzeptanzstelle ausgegebenen Autorisierungscodes erfolgt und Voraussetzung für die letzte Statusänderung bzw. für ein Einlösen des Zahlungssurrogatträgers bei der Akzeptanzstelle eine von der Datenverarbeitungsanlage bzw. vom Emittenten via Kommunikationseinrichtung an die Akzeptanzstelle ausgegebene Freigabebestätigung ist. Bei dem erfindungsgemäßen Zahlungssystem ist mithin jeder Zahlungssurrogatträger aufgrund des z.B. aufgedruckten Identifizierungscodes eindeutig identifizierbar und in der zentralen Datenverarbeitungsanlage über einen für jeden Zahlungssurrogatträger angelegten Datensatz auf seinen aktuellen Status überprüfbar. Mit der ersten Statusänderung für den Zahlungssurrogatträger in dem zugehörigen Datensatz wird einem Mißbrauch durch Diebstahl der Zahlungssurrogatträger beim Emittenten, ggf. auch bei der Abnehmerstelle, vorgebeugt, da erst nach erfolgter erster Statusänderung überhaupt ein Einlösen des Zahlungssurrogatträgers möglich ist. Da die Akzeptanzstelle vor Einlösen des Zahlungssurrogatträger eine Freigabebestätigung erhält, mit der von der Datenverarbeitungsanlage bzw. vom Emittenten bestätigt wird, daß der Zahlungssurrogatträger mit dem entsprechenden Identifizierungscode im System eingetragen und zur Einlösung freigegeben ist, besteht für die Akzeptanzstelle höchstmögliche Sicherheit, daß es sich bei dem Zahlungssurrogatträger nicht um eine Fälschung handelt. Da beim Einlösen des Zahlungssurrogatträgers durch die letzte Statusänderung ein erneutes Einlösen erfindungsgemäß verhindert wird, mithin keine Zweiteinlösungen erfolgen können, wird auch vorgebeugt, daß Kopien des Originals nicht eingelöst werden oder allenfalls einmal eingelöst werden können.

Der Datenaustausch zwischen Abnehmer bzw. Abnehmerstelle und Emittenten ermöglicht, daß bei einer bevorzugten Ausführungsform des Zahlungssystems eine vom Abnehmer bzw. von der Abnehmerstelle vorzunehmende Statusänderung den ordnungsgemäßen Erhalt des Zahlungssurrogatträgers bei ihm/ihr bestätigt, wobei vorzugsweise diese erste Statusänderung zwingende Voraussetzung für die nachfolgende Statusänderung, nämlich die Freigabe des Zahlungssurrogatträgers für das Einlösen, ist. Ein Zahlungssystem mit dem vorgenannten Sicherheitsmechahismus beugt einem Diebstahl der Zahlungssurrogatträger auf dem Transportweg zwischen Emittenten und Abnehmer bzw. Abnehmerstelle vor. Außerdem kann durch diesen Sicherheitsmechanismus der Druck des Zahlungssurrogatträgers outgesourct und an dritte Unternehmen vergeben werden, da Sicherheitslücken in diesen Unternehmen sich nicht auf das Zahlungssystem und die vom Emittenten eingerichteten Sicherheitsmechanismen des Zahlungssystems auswirken können.

Um die Freigabe durch den Abnehmer zu vereinfachen bzw. das Zahlungssystem selbst bei einer großen Anzahl von Zahlungssurrogatträgern wie insbesondere Gutscheinen effizient einsetzbar zu gestalten, können einer Gruppe von Zahlungssurrogatträger, die vom Emittenten gleichzeitig an einen Abnehmer bzw. an eine bestimmte Abnehmerstelle ausgegeben werden, eine übergeordnete Zuordnuhgsnummer oder fortlaufende Zuordnungsnummern zugeordnet sein, durch deren Übermittlung an die Datenverarbeitungsanlage die Statusänderung für den Erhalt und/oder für die Einlösefreigabe gleichzeitig für alle Zahlungssurrogatträger der Gruppe bewirkbar ist.

In bevorzugter Ausgestaltung ist der Identifizierungscode auf dem Zahlungssurrogatträger als Barcode, insbesondere EAN-Code ausgeführt und/oder mit einem Scanner von Handelskassen lesbar. Der EAN-Code bietet hierbei den Vorteil, daß zusätzlich zu dem nur mit technischen Hilfsmitteln lesbaren, eine Übersetzung erfordernden Balkensystem zugleich auch ein für den Menschen ohne weiteres lesbarer, meist dreizehnstelliger Zifferncode aufgedruckt ist, der ermöglicht, daß als Kommunikationseinrichtung auch Telefonsysteme mit Tasten- oder Sprachabfrage eingesetzt werden können. Ferner kann der Zifferncode auch per Sprache an Mitarbeiter eines Callcenters o.dgl. des Emittenten übertragen werden, die dann nach Überprüfung des Autorisierungscodes die entsprechende Statusänderung von Hand in der Datenverarbeitungsanlage vornehmen.

Um das Sicherheitssystem weiter zu erhöhen oder für die Implementierung weiterer Sicherheitsroutinen offen zu gestalten, können zusätzlich zum Identifizierungscode weitere Kennzahlencodes, vorzugsweise als Barcode, insbesondere als EAN-Code ausgeführte Kennzahlencodes, die vorzugsweise von einem Scanner von Handelskassen lesbar sind, auf dem Zahlungssurrogatträger aufgedruckt sein. Auch der Identifizierungscode für den Zahlungssurrogatträger selbst kann aus mehreren Barcodes, insbesondere EAN-Codes, die nacheinander oder parallel gelesen werden, aufgebaut sein.

Bei den zuvor genannten Statusänderungen handelt es sich um irreversible Statusänderungen, so daß nach erfolgter Statusänderung ein Zurücksetzen-auf den vorherigen Status nicht möglich ist. Die heute zur Verfügung stehenden Kommunikationseinrichtungen wie Telefon, Internet, Funkverbindungen u.dgl. sind jedoch phasenweise überlastet, so daß eine kurzfristige Störung selbst während des Datenaustausches bzw. der Datenübertragung nicht ausgeschlossen werden kann. Für diese Zwecke ist es günstig, wenn bei einer Störung während des Datenaustausches oder auf Sperrwunsch des Abnehmers bzw. des Kunden, Mitarbeiters oder der Abnehmerstelle durch eine reversible Statusänderung ein Einlösen des Zahlungssurrogatträgers vorübergehend gesperrt ist, so daß, nachdem die Ursache der Störung erforscht ist, durch eine Freischaltung der ursprüngliche Status wieder hergestellt und z.B. das Einlösen erneut erfolgreich versucht werden kann bzw. endgültig gesperrt wird.

Als zusätzliche Absicherung für den Emittenten der insbesondere bankspezifischen Zahlungssurrogate kann im Zahlungssystem vorgesehen sein, daß zwingende Voraussetzung für die vom Abnehmer vorzunehmende Statusänderungen ein Guthaben oder Dispokredit auf seinem beim Emittenten des Zahlungssurrogatträgers geführten Konto ist. Als zusätzliche Sicherheitskomponente für den Emittenten von Gutscheinen, Schecks od.dgl. kann vorgesehen sein, daß zwingende Voraussetzung für von der Abnehmerstelle, Kunden oder Mitarbeitern vorzunehmende Statusänderungen ein Zahlungseingang für die ausgegebenen Zahlungssurrogatträger beim Emittenten ist. Ferner ist vorteilhaft, wenn das Sicherheitssystem eine von der Akzeptanzstelle vorzunehmende letzte Statusänderung zur Bestätigung des Einlösens des Zahlungssurrogatträgers und Sperren eines erneuten Einlösens umfaßt. Da beim Einlösen des Zahlungssurrogatträgers durch die letzte Statusänderung ein erneutes Einlösen erfindungsgemäß verhindert wird, mithin keine Zweiteinlösungen erfolgen können, wird verhindert, daß Kopien des Originals mit gefälschten Unterschriften eingelöst werden können.

Das erfindungsgemäße Verfahren kennzeichnet sich dadurch, daß in einem mehrstufigen Sicherheitssystem mittels Datentransfer via Kommunikationseinrichtungen zwischen Abnehmer und Datenverarbeitungsanlage bzw. Emittenten sowie Akzeptanzstelle und Datenverarbeitungsanlage bzw. Emittenten wenigstens eine irreversible Statusänderung für jeden Zahlungssurrogatträger vom Abnehmer durchgeführt wird, wobei durch die Statusänderung die Freigabe des Zahlungssurrogatträgers für ein Einlösen erfolgt, wobei ferner vor jeder Statusänderung ein vom Emittenten an Abnehmer sowie Akzeptanzstelle ausgegebener Autorisierungscode überprüft wird und ein Einlösen bei der Akzeptanzstelle an eine von der Datenverarbeitungsanlage bzw. vom Emittenten via Kommunikationseinrichtung an die Akzeptanzstelle zuvor ausgegebene Freigabebestätigung gebunden ist.

Das erfindungsgemäße Verfahren bei Zahlungssystemen mit insbesondere Gutscheinen kennzeichnet sich dadurch, daß in einem mehrstufigen Sicherungssystem mittels Datentransfer via Kommunikationseinrichtungen zwischen Abnehmerstelle, Kunde oder Akzeptanzstelle und Datenverarbeitungsanlage bzw. Emittenten eine mehrfache irreversible Statusänderung für jeden Zahlungssurrogatträger durchgeführt wird, wobei durch eine von der Abnehmerstelle oder dem Kunden initiierte bzw. vorzunehmende Statusänderung die Freigabe des Zahlungssurrogatträgers für ein Einlösen erfolgt und durch eine von der Akzeptanzstelle vorzunehmende letzte Statusänderung das Einlösen des Zahlungssurrogatträgers bestätigt und ein erneutes Einlösen gesperrt wird, wobei ferner vor jeder Statusänderung eine vom Emittenten an Abnehmerstelle und Akzeptanzstelle ausgegebener Autorisierungscode überprüft wird und ein Einlösen bei der Akzeptanzstelle an eine von der Datenverarbeitungsanlage bzw. vom Emittenten via Kommunikationseinrichtung an die Akzeptanzstelle ausgegebene Freigabebestätigung gebunden ist.

Wie bei dem Zahlungssystem ist auch bei dem Verfahren die Datenverarbeitungsanlage, in der sämtliche Informationen zu jedem Zahlungssurrogatträger einschließlich des momentanen Status gespeichert sind, der zentrale Bestandteil des Sicherheitssystems, wobei durch die Statusänderungen und Abfragen mehrfach geprüft wird, ob der durch den Identifizierungscode eindeutig identifizierbare Zahlungssurrogatträger in der Datenverarbeitungsanlage existent ist und für ein Einlösen freigegeben wurde bzw. in der Datenverarbeitungsanlage existent ist und weder zuvor eingelöst noch gestohlen wurde. Eine bevorzugte Ausgestaltung des Verfahrens bei bankspezifischen Zahlungssurrogaten sieht vor, daß die Freigabebestätigung durch die Datenverarbeitungsanlage bzw. den Emittenten einerseits an die Gültigkeit der Statusänderungen des Zahlungssurrogatträgers in der Datenverarbeitungsanlage und andererseits an eine Bonitätsprüfung gebunden ist, mit der z.B. die Kreditlinie des Abnehmers überprüfbar ist.

Bei einem besonders sicheren Verfahren wird mit einer vom Abnehmer bzw. von der Abnehmerstelle vorzunehmenden Statusänderung der ordnungsgemäße Erhalt des Zahlungssurrogatträgers beim Abnehmer bzw. bei der Abnehmerstelle bestätigt, wobei diese Statusänderung zwingende Voraussetzung für die Freigabe des Zahlungssurrogatträgers für ein Einlösen ist. Weiter vorzugsweise kann auch hier bei einer Störung während des Datenaustausches oder auf Sperrwunsch vom Abnehmer automatisch eine reversible Statusänderung vorgenommen werden, mit der ein Einlösen des Zahlungssurrogatträgers vorübergehend gesperrt wird. Diese Statusänderung läßt sich im Gegensatz zu den weiter oben beschriebenen Statusänderungen umkehren, so daß der Zahlungssurrogatträger z.B. nach Ablauf einer bestimmten Zeitspanne oder nach Klärung der Ursachen der Störung erneut für ein Einlösen freigegeben wird. Besonders vorteilhaft ist ferner, wenn der Abnehmer, der Kunde und/oder der Emittent durch eine irreversible Statusänderung ein Einlösen des Zahlungssurrogatträgers sperren können.

Das erfindungsgemäße Verfahren ist besonders effektiv, wenn das Einlesen des Identifizierungscodes, das Übersenden und Überprüfen des Autorisierungscodes und das Absenden der Freigabebestätigung automatisch erfolgt und die z.B. mit Scannern von Kassensystemen gelesenen Daten z.B. via Telefon oder Internetleitung an die Datenverarbeitungsanlage abgesendet werden. Der Datentransfer mit der Datenspeicheranlage kann auch via Telefon durchgeführt werden, wobei die Datenein- und ausgabe und Autorisierung automatisch durch sprach- oder tastengesteuerte Computer, SMS oder dgl. oder unter Einsatz von Call-Centern oder dgl. erfolgt.

Weitere Vorteile und Ausgestaltungen des erfindungsgemäßen Zahlungssystems und Verfahrens werden aus den Unteransprüchen und der nachfolgenden Beschreibung von in der Zeichnung schematisch dargestellten Ausführungsbeispielen deutlich. In der Zeichnung zeigen:
**Fig. 1** einen Kreislauf für ein Zahlungssystem mit einem neutralen Scheck mit offenem Betrag als Zahlungssurrogatträger; und
**Fig. 2** einen Kreislauf für ein Zahlungssystem mit einem Gutschein oder Scheck mit feststehendem Betrag als Zahlungssurrogatträger.

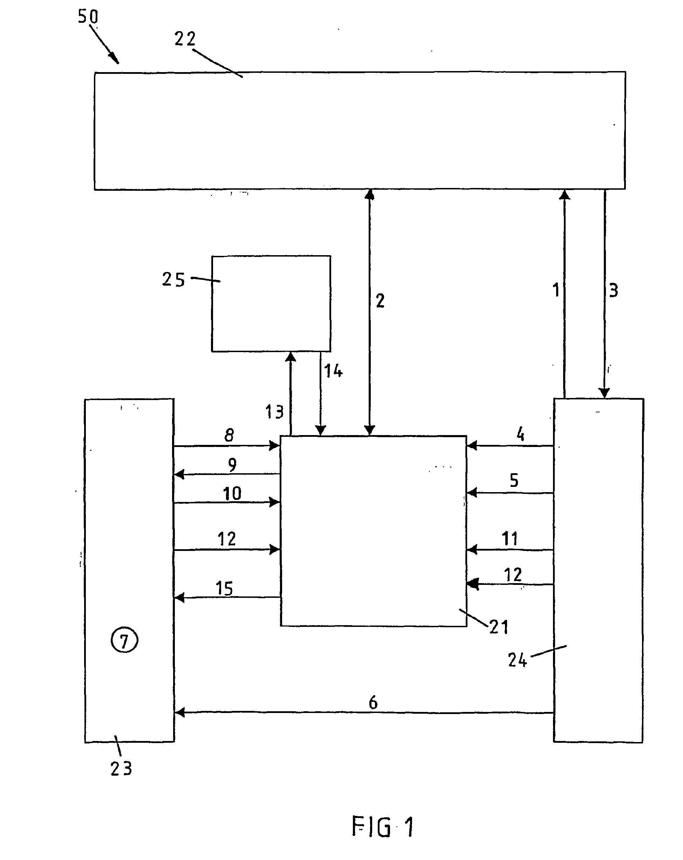

**Fig. 1** zeigt schematisch einen Kreislauf für ein Zahlungssystem mit einem neutralen Scheck als Zahlungssurrogatträger. Die Zahlungssurrogatträger, welche keinen Datenspeicher wie einen Speicherchip oder einen Magnetstreifen aufweisen, auf dem veränderliche Daten gespeichert werden könnten, sind nicht dargestellt. Ein Scheck als Zahlungssurrogatträger kann einerseits mit Daten wie Bankleitzahl und Kontonummer des Abnehmers und außerdem mit einem vorzugsweise maschinenlesbaren Identifizierungscode, beispielsweise einem EAN-Code (European Article Numbering), bedruckt sein. Der Identifizierungscode kann aus einem Barcode (z.B. EAN 13) oder aus mehreren Barcodes zusammengesetzt sein. Außerdem weist der Scheck ein Schriftfeld auf, in dem beim Ausstellen des Schecks Währung und Summe eingetragen werden, die dann den "Wert" des Schecks festlegen.

Zentraler Bestandteil des insgesamt mit 50 bezeichneten Zahlungssystem-Kreislaufs ist eine Datenverarbeitungsanlage 21, die vom Emittenten 22 der Zahlungssurrogatträger bereitgestellt und betrieben wird. Der Emittent 22 kann die Datenverarbeitungsanlage 21 selbst betreiben oder deren Betrieb an Dritte outsourcen. In der Datenverarbeitungsanlage 21 wird zu jedem Zahlungssurrogatträger, der ausgegeben wurde, der zugehörige Identifizierungscode gespeichert, über den eine eindeutige Zuordnung zwischen den im Datenspeicher der Datenverarbeitungsanlage 21 gespeicherten Daten und dem Zahlungssurrogatträger möglich ist. Ferner ist im Datenspeicher der Datenverarbeitungsanlage 21 jedem Zahlungssurrogatträger ein mehrfach irreversibel veränderbarer Statuswert zugeordnet, und es werden Informationen zumindest über den Abnehmer (Kontoinhaber) 24, an die der Emittent die Zahlungssurrogatträger ausgibt, sowie über die Akzeptanzstellen 23 gespeichert.

Der Kreislauf 50 ist wie folgt aufgebaut. Ein Abnehmer 24 flordert beim Emittenten 22 eine bestimmte Anzahl von Zahlungssurrogatträgern (z.B. Eurocheques), wie mit Pfeil 1 dargestellt, an. Der Emittent 22, z.B. die Bank oder ein Kreditinstitut, bedruckt die Zahlungssurrogatträger mit Bankleitzahl und Kontonummer sowie mit einem Identifizierungscode, der ihr zuvor von der Datenverarbeitungsanlage 21 für den Abnehmer 24 und jeden Zahlungssurrogatträger mitgeteilt wurde (Pfeil 2). Anschließend werden die entsprechend vorbereiteten, mit sämtlichen Informationen versehenen Zahlungssurrogatträger an den Abnehmer 24 versandt (Pfeil 3).

Im Datenspeicher der Datenverarbeitungsanlage 21 wird entsprechend ein Protokoll hinterlegt, über das eine Zuordnung der vergebenen Identifizierungscodes, der Anzahl der ausgegebenen Zahlungssurrogatträger, der Abnehmer 24, die die Zahlungssurrogatträger erhalten sollen etc. erfolgen kann. Bei einer für mehrere Emittenten bzw. Banken betriebenen Datenverarbeitungsanlage werden entsprechend auch Daten zum Emittenten 22 gespeichert. In der Datenverarbeitungsanlage 21 ist ferner jedem Abnehmer 24 und jeder Akzeptanzstelle 23 ein Autorisierungscode zugeordnet, so daß via moderner Kommunikationseinrichtungen wie Internet oder Telefon ein Datenaustausch zwischen Abnehmer 24 und Datenverarbeitungsanlage 21 bzw. Akzeptanzstelle 23 und Datenverarbeitungsanlage 21 stattfinden kann.

Das im Kreislauf 50 verwirklichte Sicherheitssystem, um die Zahlungen mit den Zahlungssurrogatträgern vor Mißbrauch zu schützen, umfaßt für jeden Zahlungssurrogatträger mehrere Statusänderungen im Datenspeicher der Datenverarbeitungsanlage 21. Bei der ersten, mit Pfeil 4 dargestellten Statusänderung bestätigt der Abnehmer 24 z.B. via Internet nach Eingabe seines Autorisierungscodes den ordnungsgemäßen Erhalt der übersandten Zahlungssurrogatträger. Im Datenspeicher der Datenverarbeitungsanlage 21 wird jedem Zahlungssurrogatträger daraufhin ein Statuswert "erhalten" zugeordnet. Mit diesem Statuswert "erhalten" ist ein Einlösen des Zahlungssurrogatträgers bei den Akzeptanzstellen 23 noch nicht möglich.

Die nächste Stufe im Sicherheitssystem nach Kreislauf 50 besteht in der Einlösefreigabe der Zahlungssurrogatträger, wie mit Pfeil 5 angedeutet. Die Zahlungssurrogatträger werden hierzu vom Abnehmer 24 unter Angabe seines Autorisierungscodes in der Datenverarbeitungsanlage 21 freigeschaltet. Es steht dabei jedem Abnehmer 24 frei, ob er sämtliche der erhaltenen Zahlungssurrogatträger sofort zum Einlösen freigibt oder nur einzelne freigibt, um den wirtschaftlichen Schaden bei Diebstahl zu minimieren. Der Zahlungssurrogatträger erhält dann in der Datenverarbeitungsanlage 21 den Statuswert "freigegeben".

Der Kunde bzw. Mitarbeiter 24 wird daraufhin den Zahlungssurrogatträger bei einer Akzeptanzstelle 23 einlösen (Pfeil 6). Hier setzt die letzte Stufe des Sicherheitssystems ein. Die Akzeptanzstellen 23 lesen z.B. über die Scanner ihrer Handelskassen den auf jedem Zahlungssurrogatträger aufgedruckten Identifizierungscode ein (7) und senden z.B. via Telefon oder Internet diese Daten zusammen mit ihrem Autorisierungscode an die Datenverarbeitungsanlage 21 (Pfeil 8). Im Datenspeicher der Datenverarbeitungsanlage 21 wird dann überprüft, ob der Identifizierungscode für den Zahlungssurrogatträger überhaupt im Datenspeicher hinterlegt ist und ob für diesen Identifizierungscode z.B. sowohl die Statusänderungen "erhalten" als auch "freigegeben" korrekt vorgenommen wurde. Falls im Datenspeicher der Datenverarbeitungsanlage 21 die Absolvierung sämtlicher Stufen des Sicherheitssystems korrekt ausgewiesen ist, erfolgt eine Freigabebestätigung an die Akzeptanzstellen 23 (Pfeil 9), die nach Erhalt der Freigabebestätigung den Zahlungssurrogatträger einlöst. Mit dem Einlösen kann eine letzte Statusänderung (Pfeil 10) im Datenspeicher der Datenverarbeitungsanlage 21 gekoppelt sein, so daß der Zahlungssurrogatträger in der Datenverarbeitungsanlage 21 als eingelöst gilt und auf den Status "ungültig" gesetzt ist. Ein weiteres Einlösen desselben oder ein Einlösen einer Kopie des Zahlungssurrogatträgers wird dann durch das Sicherungssystem automatisch verhindert.

Auf Sperrwunsch des Abnehmers z.B. wegen Diebstahl kann als zusätzliche Systemkomponente eine zeitweilige Sperrung z.B. mit dem Status " vorübergehend gesperrt" in das Sicherheitssystem integriert werden (Pfeil 11). Die zeitweilige Sperrung kann dann vom Abnehmer 24, ggf. nach besonderer Autorisierung und Bestätigung auch von den Akzeptanzstellen 23 (Pfeil 12) oder vom Emittenten (nicht dargestellt) in der Datenverarbeitungsanlage 21 wieder aufgehoben werden, falls der Zahlungssurrogatträger tatsächlich nicht eingelöst wurde und wiederauftaucht (vermeintlicher Diebstahl). Ferner kann der Status "vorübergehend gesperrt" vergeben werden, sofern es bei einem Datenaustausch (z.B. Pfeil 4, Pfeil 5, Pfeil 8, Pfeil 9) mit der Datenverarbeitungsanlage 21 via Kommunikationseinrichtungen zu Störungen gekommen ist.

Das Zahlungssystem 50 und das Zahlungsabwicklungsverfahren können ferner eine Bonitätsprüfung umfassen. Hierzu ist mit Block 25 das interne EDV-System einer Bank oder eines sonstigen Kreditinstitutes dargestellt. Jeder Emittent 22 kann in Abhängigkeit von einer bestimmten Summe, über die der Scheck ausgestellt ist, oder in Abhängigkeit von bestimmten Abnehmern 24 vorgeben, daß vor dem Absenden der Einlösefreigabe an die Akzeptanzstellen eine Bonitätsprüfung (Pfeil 13) durchgeführt wird. Im EDV-System der Bank wird dann geprüft, ob für die Summe, über die der Scheck ausgestellt ist, ausreichend Dekkung auf dem Konto oder innerhalb der Kreditlinie zur Verfügung steht. Das Ergebnis der Bonitätsprüfung wird dann an die Datenspeicheranlage 21 (Pfeil 14) (oder an die Akzeptanzstelle 23) übermittelt und nur bei positivem Ergebnis erfolgt eine Einlösefreigabe (Pfeil 15). Bei negativem Ergebnis kann eine entsprechende Mitteilung automatisch ausgegeben werden, so daß der Zahlungssurrogatträger ggf. eingezogen werden kann.

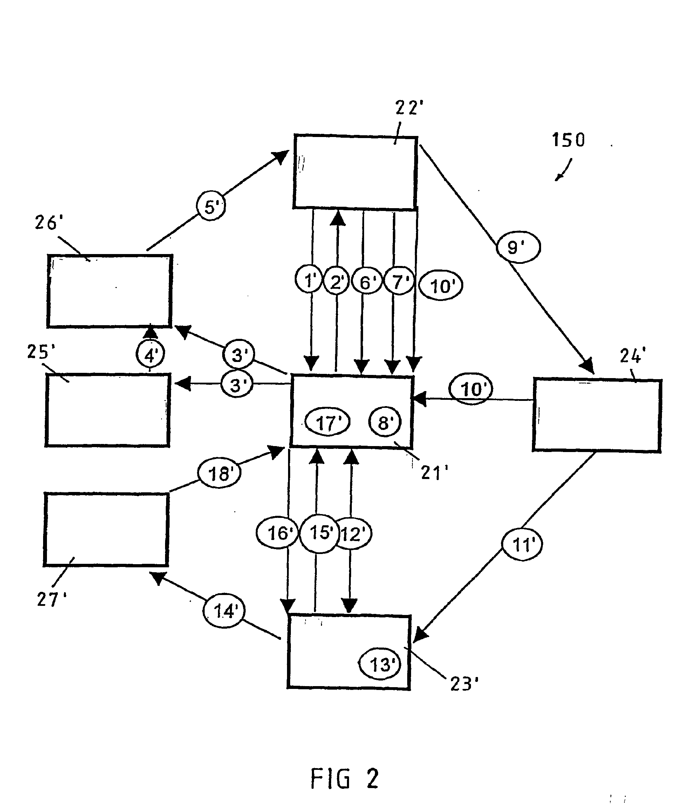

**Fig. 2** zeigt schematisch einen Kreislaufs für ein Zahlungssystem mit einem Gutschein als Zahlungssurrögatträger. Die Zahlungssurrogatträger, die keinen Datenspeicher wie einen Speicherchip oder einen Magnetstreifen aufweisen, auf dem veränderliche Daten gespeichert werden könnten, und die nicht nur mit Angaben über den Emittenten sondern insbesondere mit Informationen über den "Wert" des Gutscheins bzw. die Höhe der ausgelobten Leistung und einem maschinenlesbaren Identifizierungscode, beispielsweise einem EAN-Code (European Article Numbering) bedruckt sind, sind nicht dargestellt. Der Identifizierungscode kann aus einem Barcode (z.B. EAN 13) oder aus mehreren Barcodes zusammengesetzt sein, wobei die Numerierung der einzelnen Zahlungssurrogatträger nicht mit fortlaufenden Nummern nach einem bestimmten Verteilungsschlüssel, sondern über einen speziellen, verschlüsselten Algorithmus erfolgt, so daß für Fälscher zu keiner Zeit Gewißheit besteht, welche Identifizierungsnummern für Zahlungssurrogatträger zu bestimmten Zeitpunkten im System gültig sind.

Zentraler Bestandteil des insgesamt mit 150 bezeichneten Zahlungssystem-Kreislaufs ist eine Datenverarbeitungsanlage 21', die vom Emittenten der Zahlungssurrogatträger bereitgestellt und betrieben wird. In der Datenverarbeitungsanlage 21' wird zu jedem Zahlungssurrogatträger, der emittiert wurde, der zugehörige Identifizierungscode gespeichert, über den eine eindeutige Zuordnung zwischen den im Datenspeicher der Datenverarbeitungsanlage 21' gespeicherten Daten und dem Zahlungssurrogatträger möglich ist. Ferner ist im Datenspeicher der Datenverarbeitungsanlage jedem Zahlungssurrogatträger ein mehrfach irreversibel veränderbarer Statuswert zugeordnet, und es werden Informationen zumindest über die Abnehmerstellen 22', an die der Emittent die Zahlungssurrogatträger ausgibt, und Daten über die Akzeptanzstellen 23' gespeichert. Bei den Daten der Abnahmestellen 22' handelt es sich beispielsweise um den Firmennamen, Angaben zu den verantwortlichen Mitarbeitern, Personalnummern der Mitarbeiter etc., so daß der Emittent basierend auf den in der Datenverarbeitungsanlage 21' gespeicherten Daten Zahlungssurrogatträger wie z.B. Restaurantgutscheine, -schecks etc. für die Abnehmerstellen 22' vorbereiten und diesen zur Verfügung stellen kann.

Im Kreislauf 150 sind die Mitarbeiter bzw. Kunden der Abnehmerstellen 22' mit Bezugszeichen 24' symbolisiert. Der Kreislauf 150 ist wie folgt aufgebaut. Die Abnehmerstelle 22' bestellt für sämtliche ihre Mitarbeiter bzw. Kunden 24' bei dem Emittenten eine bestimmte Anzahl von Zahlungssurrogatträgern (z.B. Restaurant-, Geschenkgutscheine oder -schecks), wie mit Pfeil 1' dargestellt. Die Datenverarbeitungsanlage 21' des Emittenten bestätigt die Bestellung und stellt der Abnehmerstelle 22' die Kosten für die Zahlungssurrogatträger in Rechnung (Pfeil 2'). Gleichzeitig gibt die Datenverarbeitungsanlage 21' die Bestellung z.B. an outgesourcte Unternehmensteile, beispielsweise einen Spezialpapierhersteller 25' und eine Druckerei 26', weiter, wobei die Druckerei auch sämtliche notwendigen Daten über die Abnehmerstellen 22' und die Kunden bzw. Mitarbeiter 24' erhält (Pfeile 3'), um den Druck der Gutscheine vornehmen zu können. Der Papierhersteller 25', beispielsweise die Bundesdruckerei, liefert hierzu die entsprechende Anzahl an Rohlingen an die Druckerei 26', wie mit Pfeil 4' angedeutet. Die Druckerei 26' stellt die Zahlungssurrogatträger her, versieht diese einerseits mit allen notwendigen Informationen und dem Identifizierungscode, der ihr zuvor von der Datenverarbeitungsanlage 21' für jeden Kunden 24' bzw. jede Abnehmerstelle 22' und jeden Zahlungssurrogatträger mitgeteilt wurde (Pfeil 3') und versendet anschließend die entsprechend vorbereiteten, mit sämtlichen Informationen versehenen Zahlungssurrogatträger an die Abnehmerstellen 22' (Pfeil 5').

Im Datenspeicher der Datenverarbeitungsanlage 21' wird entsprechend ein Protokoll hinterlegt, über das eine Zuordnung der vergebenen Identifizierungscodes, der Anzahl der ausgegebenen Zahlungssurrogatträger, der Abnehmerstelle 22', die die . Zahlungssurrogatträger erhalten soll etc. erfolgen kann. In der Datenverarbeitungsanlage 21' ist ferner jeder Abnehmerstelle 22' und jeder Akzeptanzstelle 23' ein Autorisierungscode zugeordnet, so daß via moderner Kommunikationseinrichtungen wie Internet oder Telefon ein Datenaustausch zwischen Abnehmerstelle 22' und Datenverarbeitungsanlage 21' bzw. Akzeptanzstelle 23' und Datenverarbeitungsanlage 21.' stattfinden kann. Auf Wunsch der Abnehmerstellen 22' kann ferner jedem Kunden bzw. Mitarbeiter 24' ein weiterer Autorisierungscode zugeordnet sein, so daß auch die Kunden oder Mitarbeiter 24' mit der Datenverarbeitungsanlage 21' Daten austauschen und die Statusänderungen in dem Datenspeicher der Datenverarbeitungsanlage 21' für jeden Zahlungssurrogatträger vornehmen können.

Das im Kreislauf 150 verwirklichte Sicherheitssystem, um die Zahlungen mit den Zahlungssurrogatträgern vor Mißbrauch zu schützen, umfaßt für jeden Zahlungssurrogatträger im wesentlichen drei oder vier Statusänderungen im Datenspeicher der Datenverarbeitungsanlage 21'. Bei der ersten, mit Pfeil 6' dargestellten Statusänderung könnte die Abnehmerstelle 22' z.B. via Internet nach Eingabe ihres Autorisierungscodes den ordnungsgemäßen Erhalt der von der Druckerei 26' übersandten Zahlungssurrogatträger bestätigen. Im Datenspeicher der Datenverarbeitungsanlage 21' wird jedem Zahlungssurrogatträger daraufhin ein Statuswert "erhalten" zugeordnet. Mit diesem Statuswert "erhalten" ist ein Einlösen des Zahlungssurrogatträgers bei den Akzeptanzstellen 23' noch nicht möglich. Für den Emittenten besteht daher zusätzlich die Sicherheitsmöglichkeit, daß er zuerst den Rechnungsausgleich (Pfeil 2') abwarten kann, bevor der Zahlungssurrogatträger überhaupt als Zahlungsmittel im Kreislauf validiert werden kann. Der Eingang der Zahlung ist im Diagramm mit Pfeil 7' dargestellt. Im Datenspeicher der Datenverarbeitungsanlage 21' würde daraufhin eine interne Freigabe durch den Emittenten (Pfeil 8') erfolgen und eine Statusänderung auf "bezahlt" gesetzt.

Die nächste Stufe im Sicherheitssystem nach Kreislauf 150 besteht in der Einlösefreigabe der Zahlungssurrogatträger, wie mit Pfeil 10' angedeutet. In einer ersten Variante können die Abnehmerstellen 22' selbst sämtliche Zahlungssurrogatträger für ein Einlösen freischalten. Bei einer alternativen Variante werden die Zahlungssurrogatträger zuerst jedem Mitarbeiter bzw. Kunden 24' zur Verfügung gestellt (Pfeil 9'), bevor dieser unter Angabe seines Autorisierungscodes die einzelnen Zahlungssurrogatträger in der Datenverarbeitungsanlage 21' freischaltet. Es steht daher im Ermessen der Kunden bzw. Mitarbeiter 24', ob diese einzelne oder sämtliche der erhaltenen Zahlungssurrogatträger sofort zum Einlösen freigeben oder nur einzelne freigeben, um den wirtschaftlichen Schaden bei Diebstahl zu minimierten.

Der Kunde bzw. Mitarbeiter 24' wird daraufhin den Zahlungssurrogatträger bei den Akzeptanzstellen 23' einlösen (Pfeil 11'). Hier setzt die letzte Stufe des Sicherheitssystems ein. Die Akzeptanzstellen 23' lesen z.B. über die Scanner ihrer Handelskassen den auf jedem Zahlungssurrogatträger aufgedruckten Identifizierungscode ein (13') und senden z.B. via Telefon oder Internet diese Daten zusammen mit ihrem Autorisierurigscode an die Datenverarbeitungsanlage 21'. Im Datenspeicher der Datenverarbeitungsanlage 21' wird dann überprüft, ob der Identifizierungscode für den Zahlungssurrogatträger überhaupt im Datenspeicher hinterlegt ist und ob für diesen Identifizierungscode z.B. sowohl die Statusänderungen "erhalten", "bezahlt" als auch "freigegeben" korrekt vorgenommen wurde. Falls im Datenspeicher der Datenverarbeitungsanlage 21' sämtliche Stufen des Sicherheitssystems korrekt ausgewiesen sind, erfolgt eine Freigabebestätigung an die Akzeptanzstellen 23' (Doppelpfeil 12'), die nach Erhalt der Freigabebestätigung den Zahlungssurrogatträger einlöst und gleichzeitig die letzte Statusänderung (Pfeil 15') im Datenspeicher der Datenverarbeitungsanlage 21' vornimmt, so daß der Zahlungssurrogatträger in der Datenverarbeitungsanlage 21' als eingelöst gilt und auf den Status "ungültig" gesetzt ist, mit welchem ein weiteres Einlösen desselben oder einer Kopie des Zahlungssurrogatträgers durch das Sicherungssystem automatisch verhindert wird. Bei diesem System kann dann unmittelbar ein Zahlungsausgleich des auf dem Zahlungssurrogatträgers angegebenen Wertes von dem Emittenten an die Akzeptanzstelle 23' erfolgen, wie mit Pfeil 16' angedeutet.

Im dargestellten Kreislauf 150 ist ferner eine alternative Vorgehensweise für die letzte Statusänderung angedeutet. Die eingelösten Zahlungssurrogatträger können bei den Akzeptanzstellen 23' auch (zentral) gesammelt und an einen outgesourcten Clearingpartner 27' weitergeliefert werden (Pfeil 14'), der dann sämtliche Daten über die Zahlungssurrogatträger sammelt und die letzte Statusänderung in der Datenverarbeitungsanlage 21' zentral vornimmt (Pfeil 18'). Bei dieser Vorgehensweise wird im Datenspeicher der Datenverarbeitungsanlage 21' der jeweilige Zahlungssurrogatträger nach der Abfrage (Pfeil 12') der Akzeptanzstellen 23' sofort gesperrt. Für den Zeitraum, den in der Regel der Clearingpartner 27' für das Einlesen und Übermitteln der endgültigen Daten (Pfeil 18') braucht, kann jedoch die Auszahlung des Gegenwertes des Zahlungssurrogatträgers an die Akzeptanzstelle 23' zurückgestellt werden. Ein Mehrfacheinlösen wird bei dieser Systemvariante ebenfalls verhindert.

Im Kreislauf 150 ist mit Pfeil 2' die Rechnungsstellung des Emittenten für die an die Abnehmerstellen 22' ausgegebenen Zahlungssurrogatträger und mit Pfeil 16' die Ausgleichszahlung des Emittenten an die Akzeptanzstellen 23' dargestellt. Der in Rechnung gestellte bzw. ausgeglichene Betrag kann hierbei jeweils eine Provision für den Emittenten beinhalten; eine Provision bzw. Gebühren des Emittenten können jedoch auch von den Abnehmerstellen oder den Akzeptanzstellen alleine zu Tragen sein.

Auf Sperrwunsch des Kunden, Mitarbeiters oder der Abnehmerstelle z.B. wegen Diebstahl kann als zusätzliche Systemkomponente eine zeitweilige Sperrung z.B. mit dem Status " vorübergehend gesperrt" in das Sicherheitssystem integriert werden. Die zeitweilige Sperrung kann dann vom Emittenten, ggf. auch nach besonderer Autorisierung und Bestätigung von den Akzeptanzstellen 23', dem Clearingpartner 27' oder den Kunden bzw. Mitarbeitern 24' in der Datenverarbeitungsanlage 21' wieder aufgehoben werden (Pfeil 17), falls der Zahlungssurrogatträger tatsächlich nicht eingelöst wurde und wiederauftaucht (vermeintlicher Diebstahl). Ferner kann der Status "vorübergehend gesperrt" vergeben werden, sofern es bei einem Datenaustausch (Pfeil 6', Pfeil 10', Pfeil 12', Pfeil 15') mit der Datenverarbeitungsanlage 21' via Kommunikationseinrichtungen zu Störungen gekommen ist.

Für den Fachmann sind aus der vorhergehenden Beschreibung eine Reihe von Modifikationen für das Zahlungssystem und das Verfahren ersichtlich, die in den Schutzbereich der Ansprüche fallen sollen. So kann als Kommunikationseinrichtung beispielsweise auch eine Funkübertragung bzw. eine Übertragung via mobilem Telefon genutzt werden. Als Autorisierungscode kann dann beispielsweise die Telefonnummer des mobilen Telefons (Handy) verwendet werden; der Abnehmer bzw. Kunde oder Mitarbeiter kann weiterhin z.B. über entsprechende Datenübertragung wie SMS die Daten über den jeweiligen Zahlungssurrogatträger an die Datenverarbeitungsanlage übertragen, um den jeweiligen Zahlungssurrogatträger für das Einlösen freizuschalten. Hierbei kann der Abnehmer auch Daten über die Summe übermitteln, über die er den Scheck (Zahlungssurrogatträger) ausgestellt hat. Ein derartiges System könnte insbesondere die Sicherheit der Zahlung mit Euroschecks im In- und Ausland erheblich erhöhen, da dann die Schecks bis zu der Freigabe durch den Abnehmer bzw. Kunden gesperrt bleiben. Die Freigabe kann dann vom Kunden unmittelbar vor dem von ihm beabsichtigten Einlösen vorgenommen werden; ein Betrug mit Schecks ist bei einem derartigen Sicherheitssystem nahezu ausgeschlossen. Anstelle von vier Statusänderungen können auch weniger (keine Bestätigung des Erhalts) oder mehr irreversible Statusänderungen im Zahlungssystem bzw. Verfahren zwingend erforderlich sein. Der Datentransfer zur Datenverarbeitungsanlage kann auch auf Listen oder Datenträgern aller Art (CD's, Disketten etc.), via Intranet, per Fax oder in anderer Schriftform ggf. auch unter Zwischenschaltung von outgesourcten Unternehmensteilen erfolgen. Ferner kann auch die Datenverarbeitungsanlage outgesourct werden und vom Emittenten nicht ummittelbar sondern nur mittelbar bereitgestellt werden. Unter Gutscheine und Scheck sollen sowohl Zahlungssurrogate ohne befristete Gültigkeit als auch solche mit befristeter Gültigkeit fallen. Der Autorisierungscode kann ggf. vom Kunden oder Abnehmer auch geändert werden können. Das endgültige oder vorübergehende Sperren der Zahlungssurrogate in der Datenverarbeitungsanlage kann unter bestimmten Umständen auch vom Emittenten vorgenommen werden. Ferner kann vorgesehen werden, daß alle Zahlungssurrogate, die in der Datenverarbeitungsanlage länger als eine bestimmte Periode enthalten oder freigeschaltet sind etc., automatisch gesperrt und/oder für ungültig erklärt werden, wobei dann ach eine Rückerstattung von Beträgen oder Summen, die für diese Zahlungssurrogate bereits an den Emittenten entrichtet wurden, erfolgen kann.

## Patentansprüche

1. Zahlungssystem für bargeldlosen Zahlungsverkehr mit Zahlungssurrogaten, umfassend
a) Zahlungssurrogatträger, die jeder u.a. unveränderlich mit wenigstens einem lesbaren Identifizierungscode versehen, insbesondere bedruckt sind,
b) einer Datenverarbeitungsanlage mit einem Datenspeicher, in dem u.a. Daten für jeden Zahlungssurrogatträger einschließlich des/der zugehörigen Identifizierungscodes gespeichert sind,
c) einem Emittenten, der die Zahlungssurrogatträger und die Datenverarbeitungsanlage bereitstellt,
d) Abnehmern, die die Zahlungssurrogatträger von dem Emittenten erhalten,
e) Akzeptanzstellen, bei denen die Zahlungssurrogatträger einlösbar sind, und
ein mehrstufiges, mittels Datentransfer via Kommunikationseinrichtungen zwischen Abnehmer und Datenverarbeitungsanlage bzw. Emittenten sowie Akzeptanzstelle und Datenverarbeitungsanlage bzw. Emittenten bewirktes Sicherheitssystem, **dadurch gekennzeichnet, dass** jedem mit dem Identifizierungscode versehenen Zahlungssurrogatträger im Datenspeicher der Datenverarbeitungsanlage ein mehrfach irreversibel veränderbarer Statuswert zugeordnet ist und das Sicherheitssystem auf wenigstens einer von dem Abnehmer vorzunehmenden ersten irreversiblen Statusänderung im Datenspeicher der Datenspeicheranlage für jeden Zahlungssurrogatträger zur Freigabe des Zahlungssurrogatträgers für ein Einlösen basiert, wobei vor jeder Statusänderung eine Überprüfung eines vom Emittenten an Abnehmer sowie Akzeptanzstelle ausgegebenen Autorisierungscodes erfolgt und Voraussetzung für ein Einlösen des Zahlungssurrogatträgers bei der Akzeptanzstelle eine von der Datenverarbeitungsanlage bzw. vom Emittenten via Kommunikationseinrichtung an die Akzeptanzstelle ausgegebene, die erfolgte erste Statusänderung voraussetzende Freigabebestätigung ist.

2. Zahlungssystem nach Anspruch 1, **dadurch gekennzeichnet, daß** die Zahlungssurrogatträger Überbringer-, Order- oder neutrale Schecks, Überweisungs- oder Zahlscheinformularen, Wechsel oder Aktienurkunden u.dgl. sind.

3. Zahlungssystem nach Anspruch 2, **dadurch gekennzeichnet, daß** die Zahlungssurrogatträger neutrale Schecks o.dgl. sind, die vom Emittenten ohne Information über ihren Wert ausgegeben werden und ein Schriftfeld aufweisen, in das der Wert vor dem Einlösen eintragbar ist, wobei vorzugsweise weitere Angaben wie Bankleitzahl, Kontonummer u.dgl. auf dem Scheck angegeben sind und/oder die Schecks datenspeicherlos sind.

4. Zahlungssystem nach Anspruch 2 oder 3, **dadurch gekennzeichnet, daß** Voraussetzung für die Freigabebestätigung einerseits die Gültigkeit der Statusänderungen des Zahlungssurrogatträgers in der Datenverarbeitungsanlage und/oder andererseits eine Bonitätsprüfung ist, mit der z.B. die Kreditlinie des Abnehmers überprüfbar ist.

5. Zahlungssystem nach Anspruch 4, **dadurch gekennzeichnet, daß** die Bonitätsprüfung bei Überschreiten einer vom Emittenten festlegbaren Summe, über die der Zahlungssurrogatträger ausgestellt ist oder ausgestellt wird, erfolgt.

6. Zahlungssystem für bargeldlosen Zahlungsverkehr nach Anspruch 1, wobei
• die Zahlungssurrogate Gutscheine wie Wert-, Sach- oder Dienstleistungsgutscheine, oder Schecks wie Reiseschecks, Wertschecks, andere Sonderschecks u.dgl. sind,
• die Zahlungssurrogatträger datenspeicherlos sind und unveränderlich mit einer Information über den Wert bzw. die ausgelobte Leistung und mit dem lesbaren Identifizierungscode versehen, insbesondere bedruckt sind,
• die Abnehmer Abnehmerstellen sind, die die Zahlungssurrogatträger von dem Emittenten erhalten und an Kunden oder Mitarbeiter ausgeben oder selbst verwerten, und
• die Zahlungssurrogatträger bei den Akzeptanzstellen gegen die ausgelobte Leistung bzw. den angegebenen Wert einlösbar sind,
**dadurch gekennzeichnet, daß** das Sicherheitssystem auf einer mehrfachen irreversiblen Statusänderung für jeden Zahlungssurrogatträger basiert, umfassend die von der Abnehmerstelle oder dem Kunden vorzunehmende Statusänderung zur Freigabe des Zahlungssurrogatträgers für ein Einlösen und eine von der Akzeptanzstelle vorzunehmende letzte Statusänderung zur Bestätigung des Einlösens des Zahlungssurrogatträgers und Sperren eines erneuten Einlösens, wobei vor jeder Statusänderung eine Überprüfung eines vom Emittenten an Abnehmerstelle und Akzeptanzstelle ausgegebenen Autorisierungscodes erfolgt und Voraussetzung für die letzte Statusänderung bzw. für das Einlösen des Zahlungssurrogatträgers bei der Akzeptanzstelle die von der Datenverarbeitungsanlage bzw. vom Emittenten via Kommunikationseinrichtung an die Akzeptanzstelle ausgegebene Freigabebestätigung ist.

7. Zahlungssystem nach einem der Ansprüche 1 bis 6, **dadurch gekennzeichnet, daß** in einer Vorstufe eine von der Abnehmerstelle oder vom Abnehmer vorzunehmende Statusänderung den ordnungsgemäßen Erhalt des Zahlungssurrogatträgers beim Abnehmer oder bei der Abnehmerstelle bestätigt.

8. Zahlungssystem nach einem der Ansprüche 1 bis 7, **dadurch gekennzeichnet, daß** einer Gruppe von Zahlungssurrogatträger, die vom Emittenten gleichzeitig an einen Abnehmer oder eine bestimmte Abnehmerstelle ausgegeben werden, eine übergeordnete Zuordnungsnummer oder fortlaufende Zuordnungsnummern zugeordnet ist/sind, durch deren Übermittlung an die Datenverarbeitungsanlage die Statusänderung für den Erhalt und/oder für die Einlösefreigabe gleichzeitig für alle Zahlungssurrogatträger der Gruppe bewirkbar ist.

9. Zahlungssystem nach einem der Ansprüche 1 bis 8, **dadurch gekennzeichnet, daß** der Identifizierungscode und/oder die Zuordnungsnummer auf dem Zahlungssurrogatträger als Barcode, insbesondere EAN-Code ausgeführt ist/sind und mit einem Scanner von Handelskassen lesbar ist/sind.

10. Zahlungssystem nach einem der Ansprüche 1 bis 9, **dadurch gekennzeichnet, daß** zusätzlich zum Identifizierungscode weitere Kennzahlencodes vorzugsweise als Barcode, insbesondere als EAN-Code ausgeführte Kennzahlencodes, die vorzugsweise.mit einem Scanner von Handelskassen lesbar sind, auf dem Zahlungssurrogatträger aufgedruckt sind.

11. Zahlungssystem nach einem der Ansprüche 1 bis 10, **dadurch gekennzeichnet, daß** bei einer Störung während des Datenaustausches oder auf Sperrwunsch vom Abnehmer oder vom Kunden, Mitarbeiter oder der Abnehmerstelle durch eine reversible Statusänderung ein Einlösen des Zahlungssurrogatträgers vorübergehend gesperrt ist.

12. Zahlungssystem nach einem der Ansprüche 1 bis 11, **dadurch gekennzeichnet, daß** Voraussetzung für eine vom Abnehmer vorzunehmende Statusänderungen ein Guthaben oder Dispokredit auf seinem beim Emittenten des Zahlungssurrogatträgers geführten Konto ist oder Voraussetzung für von der Abnehmerstelle, Kunden oder Mitarbeitern vorzunehmende Statusänderungen ein Zahlungseingang für die ausgegebenen Zahlungssurrogatträger beim Emittenten ist.

13. Zahlungssystem nach einem der Ansprüche 1 bis 12, insbesondere 6 bis 12, **dadurch gekennzeichnet, daß** das Sicherheitssystem eine von der Akzeptanzstelle vorzunehmende letzte Statusänderung zur Bestätigung des Einlösens des Zahlungssurrogatträgers und Sperren eines erneuten Einlösens umfaßt.

14. Zahlungssystem nach Ansprüch 13, **dadurch gekennzeichnet, daß** die letzte Statusänderung eine Auszahlung an die entsprechende Akzeptanzstelle auslöst.

15. Verfahren zum Abwickeln des Zahlungsverkehres in bargeldlosen Zahlungssystemen mit Zahlungssurrogaten, wobei die Zahlungssysteme umfassen:
a) Zahlungssurrogatträger, die mit wenigstens einem lesbaren Identifizierungscode versehen, insbesondere bedruckt sind,
b) eine Datenverarbeitungsanlage mit einem Datenspeicher, in dem u.a. Daten für jeden Zahlungssurrogatträger einschließlich des/der zugehörigen Identifizierungscode/s gespeichert sind,
c) einen Emittenten, der die Zahlungssurrogatträger und die Datenverarbeitungsanlage bereitstellt,
d) Abnehmer, die die Zahlungssurrogatträger von dem Emittenten erhalten, und
e) Akzeptanzstellen, bei denen die Zahlungssurrogatträger einlösbar sind, und
ein mehrstufiges Sicherheitssystem, das mittels Datentransfer via Kommunikationseinrichtungen zwischen Abnehmer und Datenverarbeitungsanlage bzw. Emittenten sowie Akzeptanzstelle und Datenverarbeitungsanlage bzw. Emittenten stattfindet, **dadurch gekennzeichnet, dass** jedem mit Identifizierungscode versehenen Zahlungssurrogatträger im Datenspeicher der Datenspeicheranlage ein mehrfach irreversibel veränderbarer Statuswert zugeordnet wird und im Sicherheitssystem wenigstens eine erste irreversible Statusänderung im Datenspeicher der Datenverarbeitungsanlage für jeden Zahlungssurrogatträger vom Abnehmer durchgeführt wird, wobei durch die erste Statusänderung die Freigabe des Zahlungssurrogatträgers für ein Einlösen erfolgt,
wobei ferner vor jeder Statusänderung ein vom Emittenten an Abnehmer sowie Akzeptanzstelle ausgegebener Autorisierungscode überprüft wird und ein Einlösen bei der Akzeptanzstelle an eine von der Datenverarbeitungsanlage bzw. vom Emittenten via Kömmunikationseinrichtung an die Akzeptanzstelle zuvor ausgegebene, die erfolgte erste Statusänderung voraussetzende Freigabebestätigung gebunden ist.

16. Verfahren nach Anspruch 15, **dadurch gekennzeichnet, daß** die Zahlungssurrogate Überbringer-, Order- oder neutrale Schecks, Überweisungs- oder Zahlscheinformularen, Wechsel oder Aktienurkunden u.dgl. sind.

17. Verfahren nach Anspruch 15, wobei
• die Zahlungssurrogate Gutscheinen wie Wert-, Sach- oder Dienstleistungsgutscheinen, oder Schecks wie Reiseschecks, Wertschecks u.dgl. sind,
• die die Gutscheine oder Schecks bildenden Zahlungssurrogatträger datenspeicherlos sind und jeder mit einer Information über den Wert bzw. die ausgelobte Leistung und mit dem lesbaren Identifizierungscode versehen, insbesondere bedruckt sind,
• die Abnehmer Abnehmerstellen sind, die die Zahlungssurrogatträger von dem Emittenten erhalten und an Kunden oder Mitarbeiter ausgeben oder selbst verwerten, und
• die Zahlungssurrogatträger bei den Akzeptanzstellen gegen den Wert bzw. die ausgelobte Leistung einlösbar sind, **dadurch gekennzeichnet, daß** eine mehrfache irreversible Statusänderung für jeden Zahlungssurrogatträger durchgeführt wird, wobei durch die von der Abnehmerstelle oder dem Kunden vorzunehmende Statusänderung die Freigabe des Zahlungssurrogatträgers für ein Einlösen erfolgt und durch eine von der Akzeptanzstelle vorzunehmende letzte Statusänderung das Einlösen des Zahlungssurrogatträgers bestätigt und ein erneutes Einlösen gesperrt wird.

18. Verfahren nach Anspruch 15 oder 16, **dadurch gekennzeichnet, daß** die Freigabebestätigung durch die Datenverarbeitungsanlage bzw. den Emittenten an die Gültigkeit der Statusänderungen des Zahlungssurrogatträgers in der Datenverarbeitungsanlage und vorzugsweise auch an eine Bonitätsprüfung gebunden ist, mit der z.B. die Kreditlinie des Abnehmers überprüfbar ist.

19. Verfahren nach einem der Ansprüche 15 bis 18, **dadurch gekennzeichnet, daß** mit einer vom Abnehmer bzw. der Abnehmerstelle vorzunehmenden Statusänderung der ordnungsgemäße Erhalt des Zahlungssurrogatträgers beim Abnehmer bzw. bei der Abnehmerstelle bestätigt wird, wobei diese Statusänderung zwingende Voraussetzung für die Freigabe des Zahlungssurrogatträgers für ein Einlösen ist.

20. Verfahren nach einem der Ansprüche 15 bis 19, **dadurch gekennzeichnet, daß** bei einer Störung während des Datenaustausches oder auf Sperrwunsch vom Abnehmer bzw. vom Kunden, Mitarbeiter oder der Akzeptanzstelle automatisch eine reversible Statusänderung vorgenommen wird, mit der ein Einlösen des Zahlungssurrogatträgers vorübergehend gesperrt wird.

21. Verfahren nach einem der Ansprüche 15 bis 20, **dadurch gekennzeichnet, daß** der Abnehmer und/oder der Emittent durch eine irreversible Statusänderung ein Einlösen des zahlungssurrogatträgers sperren können.

22. Verfahren nach einem der Ansprüche 15 bis 21, **dadurch gekennzeichnet, daß** das Einlesen des Identifizierungscodes, das Übersenden und Überprüfen des Autorisierungscodes, das Absenden der Freigabebestätigung und/oder der Zahlungsausgleich mit der Akzeptanzstelle automatisch erfolgt.

23. Verfahren nach einem der Ansprüche 15 bis 22, **dadurch gekennzeichnet, daß** durch eine von der Akzeptanzstelle vorzunehmende letzte Statusänderung das Einlösen des Zahlungssurrogatträgers bestätigt und ein erneutes Einlösen gesperrt wird.

24. Verfahren nach einem der Ansprüche 17 oder 19 bis 23, **dadurch gekennzeichnet, daß** Voraussetzung für eine vom Kunden, Mitarbeiter oder der Abnehmerstelle vorzunehmende Statusänderung ein Zahlungseingang für die ausgegebenen Zahlungssurrogate beim Emittenten ist.

25. Zahlungssystem oder Verfahren nach einem der Ansprüche 1 bis 24, **dadurch gekennzeichnet, daß** der Datentransfer mit der Datenspeicheranlage via Internet oder via Telefon durchgeführt wird, wobei die Datenein- und ausgabe und Autorisierung automatisch durch sprach- oder tastengesteuerte Computer, SMS oder dgl. oder unter Einsatz von Call Centern oder dgl. erfolgt.

26. Zahlungssystem oder Verfahren nach einem der Ansprüche 1 bis 25, **dadurch gekennzeichnet, daß** die Identifizierungscodes und Kennzahlencodes nach einem verschlüsselten Algorithmus vergeben werden.

27. Zahlungssystem oder Verfahren nach einem der Ansprüche 1 bis 26, **dadurch gekennzeichnet, daß** der Autorisierungscode nach einem verschlüsselten Algorithmus vergeben wird.

## Claims

1. Payment system for cashless payment transactions using payment surrogates, comprising
a) payment surrogate carriers, each of which is provided, particularly printed, with at least one readable identification code in unalterable form, inter alia,
b) a data processing installation having a data memory which stores, inter alia, data for each payment surrogate carrier, including the associated identification code(s),
c) an issuer which provides the payment surrogate carriers and the data processing installation,
d) consumers which receive the payment surrogate carriers from the issuer,
e) acceptance points at which the payment surrogate carriers can be cashed in, and
a multistage security system which is implemented by means of data transfer via communication devices between consumer and data processing installation or issuer and also acceptance point and data processing installation or issuer,
**characterized in that** each payment surrogate carrier provided with the identification code in the data memory of the data processing installation has an associated status value which can be irreversibly altered a plurality of times and the security system is based on at least one first irreversible status change to be performed by the consumer in the data memory of the data storage installation for each payment surrogate carrier for the purpose of releasing the payment surrogate carrier for cashing in, wherein prior to any status change and the authorization code issued by the issuer to the consumer and the acceptance point is checked and a prerequisite for cashing in the payment surrogate carrier at the acceptance point is a release confirmation which has been issued to the acceptance point by the data processing installation or by the issuer via communication device and which presupposes that the first status change has been made.

2. Payment system according to Claim 1, **characterized in that** the payment surrogate carriers are bearer cheques, order cheques or neutral cheques, transfer or payment slip forms, bills of exchange or share certificates and the like.

3. Payment system according to Claim 2, **characterized in that** the payment surrogate carriers are neutral cheques or the like which are issued by the issuer without any information about their value and have a writing box into which the value can be entered prior to cashing in, wherein preferably further details such as sort code, account number and the like are indicated on the cheque and/or the cheques have no data memory.

4. Payment system according to Claim 2 or 3,
**characterized in that** a prerequisite for the release confirmation is firstly the validity of the status changes for the payment surrogate carrier in the data processing installation and/or secondly a credit assessment, which can be used to check the consumer's borrowing limit, for example.

5. The payment system according to Claim 4,
**characterized in that** the credit assessment is performed if a sum which can be stipulated by the issuer and for which the payment surrogate carrier has been issued or is being issued is exceeded.

6. Payment system for cashless payment transactions according to Claim 1, wherein
• the payment surrogates are vouchers such as value vouchers, tangible-asset vouchers or service vouchers, or cheques such as travellers cheques, value cheques, other special cheques and the like,
• the payment surrogate carriers have no data memory and are unalterably provided, particularly printed, with a piece of information about the value or the offered service and with the readable identification code,
• the consumers are consumer points which receive the payment surrogate carriers from the issuer and issue them to customers or colleagues or use them themselves, and
• the payment surrogate carriers can be cashed in for the offered service or the indicated value at the acceptance points,
**characterized in that** the security system is based on a multiple irreversible status change for each payment surrogate carrier, comprising the status change to be performed by the consumer point or the customer for the purpose of releasing the payment surrogate carrier for cashing in and a last status change to be performed by the acceptance point for the purpose of confirming that the payment surrogate carrier has been cashed in and blocking it from being cashed in again, wherein prior to any status change an authorization code issued by the issuer to the consumer point and the acceptance point is checked and a prerequisite for the last status change or for the payment surrogate carrier to be cashed in at the acceptance point is the release confirmation issued to the acceptance point by the data processing installation or by the issuer via communication device.

7. Payment system according to one of Claims 1 to 6,
**characterized in that** in a preliminary stage a status change to be performed by the consumer point or by the consumer confirms that the payment surrogate carrier has been duly received by the consumer or by the consumer point.

8. Payment system according to one of Claims 1 to 7,
**characterized in that** a group of payment surrogate carriers which are issued to a consumer or a particular consumer point by the issuer at the same time has an associated superordinate association number or associated consecutive association numbers, the transmission of which to the data processing installation can bring about the status change for receipt and/or for release for cashing in for all the payment surrogate carriers in the group at the same time.

9. Payment system according to one of Claims 1 to 8,
**characterized in that** the identification code and/or the association number is/are shown on the payment surrogate carrier as a barcode, particularly an EAN code, and can be read by commercial checkouts using a scanner.

10. Payment system according to one of Claims 1 to 9,
**characterized in that** in addition to the identification code there are further index codes, preferably index codes in the form of a barcode, particularly in the form of an EAN code, which can preferably be read by commercial checkouts using a scanner, printed on the payment surrogate carrier.

11. Payment system according to one of Claims 1 to 10,
**characterized in that** in the event of a fault during the data interchange or upon a blocking request from the consumer or from the customer, colleague or the consumer point, the payment surrogate carrier is temporarily blocked from being cashed in by a reversible status change.

12. Payment system according to one of Claims 1 to 11,
**characterized in that** a prerequisite for a status change to be performed by the consumer is a credit or overdraft facility on his account that is managed by the issuer of the payment surrogate carrier, or a prerequisite for status changes to be performed by the consumer point, customers or colleagues is receipt, by the issuer, of a payment for the payment surrogate carrier which is to be issued.

13. Payment system according to one of Claims 1 to 12, particularly 6 to 12, **characterized in that** the security system comprises a last status change to be performed by the acceptance point for the purpose of confirming that the payment surrogate carrier has been cashed in and blocking it from being cashed in again.

14. Payment system according to Claim 13,
**characterized in that** the last status change triggers a payment to the relevant acceptance point.

15. Method for handling payment transactions in cashless payment systems using payment surrogates, wherein the payment systems comprise:
a) payment surrogate carriers which are provided, particularly printed, with at least one readable identification code,
b) a data processing installation having a data memory which stores, inter alia, data for each payment surrogate carrier, including the associated identification code(s),
c) an issuer which provides the payment surrogate carriers and the data processing installation,
d) consumers which receive the payment surrogate carriers from the issuer, and
e) acceptance points at which the payment surrogate carriers can be cashed in, and
a multistage security system which is implemented by means of data transfer via communication devices between consumer and data processing installation or issuer and also acceptance point and data processing installation or issuer,
**characterized in that** each payment surrogate carrier provided with identification code in the data memory of the data storage installation is allocated a status value which can be irreversibly altered a plurality of times, and at least one first irreversible status change in the data memory of the data processing installation is performed in the security system by the consumer for each payment surrogate carrier, wherein the first status change releases the payment surrogate carrier for cashing in, wherein prior to any status change an authorization code issued by the issuer to the consumer and acceptance point is also checked and cashing in at the acceptance point is tied to a release confirmation which has been issued to the acceptance point by the data processing installation or by the issuer via communication device previously and which presupposes that the first status change has been made.

16. Method according to Claim 15, **characterized in that** the payment surrogates are bearer cheques, order cheques or neutral cheques, transfer or payment slip forms, bills of exchange or share certificates and the like.

17. Method according to Claim 15, wherein
• the payment surrogates are vouchers such as value vouchers, tangible-asset vouchers or service vouchers, or cheques such as travellers cheques, value cheques and the like,
• the payment surrogate carriers forming the vouchers or cheques have no data memory and are each provided, particularly printed, with a piece of information about the value or the offered service and with the readable identification code,
• the consumers are consumer points which receive the payment surrogate carriers from the issuer and issue them to customers or colleagues or use them themselves, and
• the payment surrogate carriers can be cashed in for the value or the offered service at the acceptance points,
**characterized in that** a multiple irreversible status change is performed for each payment surrogate carrier, wherein the status change to be performed by the consumer point or the customer releases the payment surrogate carrier for cashing in, and a last status change to be performed by the acceptance point confirms that the payment surrogate carrier has been cashed in and blocks it from being cashed in again.

18. Method according to Claim 15 or 16, **characterized in that** the release confirmation by the data processing installation or the issuer is tied to the validity of the status changes for the payment surrogate carrier in the data processing installation and preferably also to a credit assessment which can be used to check the consumer's borrowing limits, for example.

19. Method according to one of Claims 15 to 18,
**characterized in that** a status change to be performed by the consumer or the consumer point is used to confirm that the payment surrogate carrier has been duly received by the consumer or by the consumer point, wherein said status change is an imperative prerequisite for the payment surrogate carrier to be released for cashing in.

20. Method according to one of Claims 15 to 19,
**characterized in that** in the event of a fault during the data interchange or upon a blocking request from the consumer or from the customer, colleague or acceptance point, a reversible status change is automatically performed which is used to temporarily block the payment surrogate carrier from being cashed in.

21. Method according to one of Claims 15 to 20,
**characterized in that** the consumer and/or the issuer can block the payment surrogate carrier from being cashed in by means of an irreversible status change.

22. Method according to one of Claims 15 to 21,
**characterized in that** the reading-in of the identification code, the forwarding and checking of the authorization code, the sending of the release confirmation and/or the clearance of payments with the acceptance point takes place automatically.

23. Method according to one of Claims 15 to 22,
**characterized in that** a last status change to be performed by the acceptance points confirms that the payment surrogate carrier has been cashed in and blocks it from being cashed in again.

24. Method according to one of Claims 17 or 19 to 23,
**characterized in that** a prerequisite for a status change to be performed by the customer, colleague or consumer point is receipt, by the issuer, of a payment for the issued payment surrogates.

25. Payment system or method according to one of Claims 1 to 24, **characterized in that** the data transfer with the data storage installation is performed via Internet or via telephone, wherein the data input and output and authorization are performed automatically by voice-controlled or key-controlled computers, SMS or the like or using call centres or the like.

26. Payment system or method according to one of Claims 1 to 25, **characterized in that** the identification codes and index codes are allocated according to an encrypted algorithm.

27. Payment system or method according to one of Claims 1 to 26, **characterized in that** the authorization code is allocated according to an encrypted algorithm.

## Revendications

1. Système de paiement pour transactions par chèques et virements avec des moyens de paiement de substitution, comprenant :
a) des supports de moyens de paiement de substitution, lesquels sont chacun munis, en particulier de manière non modifiable, d'au moins un code d'identification lisible, et sont en particulier imprimés,
b) un dispositif de traitement de données avec une mémoire de données, dans laquelle entre autres des données pour chaque support de moyen de paiement de substitution sont enregistrées, y compris le/les code(s) d'identification associé(s),
c) un émetteur, lequel met à disposition les supports de moyens de paiement de substitution et le dispositif de traitement de données,
d) des preneurs, lesquels obtiennent les supports de moyens de paiement de substitution de la part de l'émetteur,
e) des accepteurs, auprès desquels les supports de moyens de paiement de substitution peuvent être encaissés, et
un système de sécurité à plusieurs étapes fonctionnant à l'aide de transferts de données via des dispositifs de communication entre preneur et dispositif de traitement de données et/ou émetteur ainsi qu'accepteur et dispositif de traitement de données et/ou émetteur, **caractérisé en ce que** l'on associe à chacun des supports de moyen de paiement de substitution muni du code d'identification dans la mémoire de données du dispositif de traitement de données une valeur de statut modifiable de manière irréversible et multiple, et **en ce que** le système de sécurité repose sur au moins une première modification irréversible du statut à réaliser par le preneur dans la mémoire de données du dispositif de stockage de données pour chaque support de moyen de paiement de substitution pour l'autorisation d'encaissement du support de moyen de paiement de substitution, dans lequel, avant chaque modification du statut, il y a une vérification d'un code d'autorisation délivré par l'émetteur à l'attention du preneur ainsi que de l'accepteur, et une condition préalable à un encaissement du support de moyen de paiement de substitution auprès de l'accepteur étant une confirmation d'autorisation, à la condition préalable d'une première modification du statut réalisée, délivrée par le dispositif de traitement de données et/ou l'émetteur via un dispositif de communication à l'attention de l'accepteur.

2. Système de paiement selon la revendication 1,
**caractérisé en ce que** les supports de moyens de paiement de substitution sont des chèques au porteur, à ordre ou neutres, des formulaires de virement ou de paiement, des lettres de change ou des titres d'actions et similaires.

3. Système de paiement selon la revendication 2,
**caractérisé en ce que** les supports de moyens de paiement de substitution sont des chèques neutres ou similaires, lesquels sont émis par l'émetteur sans information sur leur valeur et lesquels présentent une zone d'écriture qu'il est possible de remplir avec la valeur avant l'encaissement, d'autres indications étant de préférence mentionnées sur le chèque, comme le code bancaire, le numéro de compte et similaires et/ou les chèques étant sans stockage des données.

4. Système de paiement selon la revendication 2 ou 3, **caractérisé en ce que** la condition préalable à la confirmation d'autorisation consiste d'une part en la validité des modifications du statut du support de moyen de paiement de substitution dans le dispositif de traitement de données et/ou d'autre part en un contrôle de solvabilité grâce auquel on vérifie par exemple le plafond du crédit accordé au preneur.

5. Système de paiement selon la revendication 4,
**caractérisé en ce que** le contrôle de solvabilité est réalisé en cas de dépassement d'une somme pouvant être déterminée par l'émetteur, le support de moyen de paiement de substitution ayant été établi ou étant établi pour un montant dépassant celle-ci.

6. Système de paiement pour transactions par chèques et virements selon la revendication 1,
- les moyens de paiement de substitution étant des bons tels que des bons de valeurs, de valeurs réelles ou de prestations de services, ou des chèques tels que des travellers chèques, des chèques en valeur déclarée, d'autres chèques spéciaux et similaires,
- les supports de moyens de paiement de substitution étant sans stockage des données et étant munis de manière non modifiable d'une information concernant la valeur et/ou la prestation mise à prix et du code d'identification lisible, et étant en particulier imprimés,
- les preneurs étant des organismes preneurs qui obtiennent les supports de moyens de paiement de substitution de la part de l'émetteur et les délivrent à des clients ou collaborateurs ou bien les utilisent eux-mêmes, et
- les supports de moyens de paiement de substitution pouvant être encaissés auprès des accepteurs en échange de la prestation mise à prix et/ou de la valeur indiquée,
**caractérisé en ce que** le système de sécurité repose sur une modification du statut irréversible et multiple pour chaque support de moyen de paiement de substitution, comprenant la modification du statut à réaliser par l'organisme preneur ou le client pour l'autorisation d'encaissement du support de moyen de paiement de substitution et une dernière modification du statut à réaliser par l'accepteur pour la confirmation de l'encaissement du support de moyen de paiement de substitution et le blocage d'un nouvel encaissement, dans lequel, avant chaque modification du statut, il y a une vérification d'un code d'autorisation délivré par l'émetteur à l'attention de l'organisme preneur et de l'accepteur et une condition préalable à la dernière modification du statut et/ou à l'encaissement du support de moyen de paiement de substitution auprès de l'accepteur étant la confirmation d'autorisation délivrée par le dispositif de traitement de données et/ou l'émetteur via le dispositif de communication à l'attention de l'accepteur.

7. Système de paiement selon l'une des revendications 1 à 6, **caractérisé en ce que** lors d'une étape préalable, une modification du statut à réaliser par l'organisme preneur ou le preneur confirme l'obtention conforme du support de moyen de paiement de substitution chez le preneur ou l'organisme preneur.

8. Système de paiement selon l'une des revendications 1 à 7, **caractérisé en ce que** l'on associe à un groupe de supports de moyens de paiement de substitution, lesquels ont été délivrés simultanément par l'émetteur à l'attention d'un preneur ou d'un organisme preneur déterminé, un numéro d'attribution prioritaire ou des numéros d'attribution dans l'ordre, lequel ou lesquels, lorsqu'il(s) est/sont communiqué(s) au dispositif de traitement de données, permet(tent) de réaliser la modification du statut pour l'obtention et/ou l'autorisation d'encaissement de manière simultanée pour tous les supports de moyens de paiement de substitution du groupe.

9. Système de paiement selon l'une des revendications 1 à 8, **caractérisé en ce que** lé code d'identification et/ou le numéro d'attribution sur le support de moyen de paiement de substitution est/sont réalisé(s) en tant que code-à-barres, en particulier code EAN et peut/peuvent être lu(s) avec un scanner de caisses du commerce.

10. Système de paiement selon l'une des revendications 1 à 9, **caractérisé en ce qu'**en plus du code d'identification, d'autres codes à numéro d'identification, de préférence des codes à numéro d'identification réalisés en tant que codes-à-barres, en particulier en tant que code EAN, lesquels peuvent être lus de préférence avec un scanner de caisses du commerce, sont imprimés sur le support de moyen de paiement de substitution.

11. Système de paiement selon l'une des revendications 1 à 10, **caractérisé en ce que**, en cas de perturbation au cours de l'échange des données ou en cas de souhait d'un blocage de la part du preneur ou du client, des collaborateurs ou de l'organisme preneur, un encaissement du support de moyen de paiement de substitution est temporairement bloqué grâce à une modification de statut réversible.

12. Système de paiement selon l'une des revendications 1 à 11, **caractérisé en ce qu'**une condition préalable à une modification de statut à réaliser par un preneur consiste en un solde créditeur ou un crédit disponible sur son compte tenu chez l'émetteur du support de moyen de paiement de substitution, ou **en ce qu'**une condition préalable pour des modifications de statut à réaliser par l'organisme preneur, le client ou des collaborateurs, consiste en une entrée de fonds pour les supports de moyen de paiement de substitution émis chez l'émetteur.

13. Système de paiement selon l'une des revendications 1 à 12, en particulier 6 à 12, **caractérisé en ce que** le système de sécurité comprend une dernière modification du statut à réaliser par l'accepteur pour la confirmation de l'encaissement du support de moyen de paiement de substitution, et un blocage d'un nouvel encaissement.

14. Système de paiement selon la revendication 13, **caractérisé en ce que** la dernière modification du statut déclenche un règlement à l'attention de l'accepteur correspondant.

15. Procédé pour la réalisation de transactions dans des systèmes de paiement par chèques et virements avec des supports de moyens de paiement de substitution, les systèmes de paiement comprenant :
a) des supports de moyens de paiement de substitution, lesquels sont munis d'au moins un code d'identification lisible, et sont en particulier imprimés,
b) un dispositif de traitement de données avec une mémoire de données, dans laquelle entre autres des données pour chaque support de moyen de paiement de substitution sont enregistrées, y compris le/les code(s) d'identification associé(s),
c) un émetteur, lequel met à disposition les supports des moyens de paiement de substitution et le dispositif de traitement de données,
d) des preneurs, lesquels obtiennent les supports de moyens de paiement de substitution de la part de l'émetteur, et
e) des accepteurs, auprès desquels les supports de moyens de paiement de substitution peuvent être encaissés, et
un système de sécurité à plusieurs étapes réalisé à l'aide de transferts de données via des dispositifs de communication entre preneur et dispositif de traitement de données et/ou émetteur ainsi qu'accepteur et dispositif de traitement de données et/ou émetteur, **caractérisé en ce que** l'on associe à chacun des supports de moyen de paiement de substitution munis du code d'identification dans la mémoire de données du dispositif de stockage de données une valeur de statut modifiable de manière irréversible et multiple, et **en ce que** l'on réalise dans le système de sécurité au moins une première modification irréversible du statut dans la mémoire de données du dispositif de traitement de données pour chaque support de moyen de paiement de substitution grâce au preneur, dans lequel, grâce à la première modification du statut, il y a une autorisation d'encaissement du support de moyen de paiement de substitution et, avant chaque modification du statut, il y a une vérification d'un code d'autorisation délivré par l'émetteur à l'attention du preneur ainsi que de l'accepteur, et un encaissement auprès de l'accepteur dépendant d'une confirmation d'autorisation, à la condition préalable d'une première modification du statut réalisée, préalablement délivrée par le dispositif de traitement de données et/ou l'émetteur via un dispositif de communication à l'attention de l'accepteur.

16. Procédé selon la revendication 15, **caractérisé en ce que** les moyens de paiement de substitution sont des chèques au porteur, à ordre ou neutres, des formulaires de virement ou de paiement, des lettres de change ou des titres d'actions et similaires.

17. Procédé selon la revendication 15,
- les moyens de paiement de substitution étant des bons tels des bons de valeurs, de valeurs réelles ou de prestations de services, ou des chèques tels des travellers chèques, des chèques en valeur déclarée et similaires,
- les supports de moyens de paiement de substitution formant les bons ou les chèques étant sans stockage des données et étant munis chacun d'une information concernant la valeur et/ou la prestation mise à prix et du code d'identification lisible, et étant en particulier imprimés,
- les preneurs étant des organismes preneurs qui obtiennent les supports de moyens de paiement de substitution de la part de l'émetteur et les délivrent à dés clients ou collaborateurs ou bien les utilisent eux-mêmes, et
- les supports de moyens de paiement de substitution pouvant être encaissés auprès des accepteurs en échange de la prestation mise à prix et/ou de la valeur, **caractérisé en ce que** l'on réalise une modification du statut irréversible et multiple pour chaque support de moyen de paiement de substitution, dans lequel, grâce à la modification du statut à réaliser par l'organisme preneur ou le client, il y a une autorisation d'encaissement du support de moyen de paiement de substitution et dans lequel, grâce à une dernière modification du statut à réaliser par l'accepteur, il y a confirmation de l'encaissement du support de moyen de paiement de substitution et un blocage d'un nouvel encaissement.

18. Procédé selon la revendication 15 ou 16,
**caractérisé en ce que** la confirmation d'autorisation par le dispositif de traitement de données et/ou l'émetteur dépend de la validité des modifications de statut du support de moyen de paiement de substitution dans le dispositif de traitement de données, et de préférence également d'un contrôle de la solvabilité grâce auquel on peut par exemple vérifier le plafond du crédit alloué au preneur.

19. Procédé selon l'une des revendications 15 à 18, **caractérisé en ce qu'**avec une modification du statut à réaliser par le preneur et/ou l'organisme preneur, on confirme l'obtention conforme du support de moyen de paiement de substitution chez le preneur et/ou l'organisme preneur, cette modification du statut étant une condition préalable indispensable à l'autorisation d'encaissement du support de moyen de paiement de substitution.

20. Procédé selon l'une des revendications 15 à 19, **caractérisé en ce que**, en cas de perturbation au cours de l'échange des données ou en cas de souhait d'un blocage de la part du preneur et/ou du client, des collaborateurs ou de l'accepteur, on procède automatiquement à une modification du statut réversible, grâce à laquelle un encaissement du support de moyen de paiement de substitution est temporairement bloqué.

21. Procédé selon l'une des revendications 15 à 20, **caractérisé en ce que** le preneur et/ou l'émetteur peuvent bloquer un encaissement du support de moyen de paiement de substitution grâce à une modification du statut irréversible.

22. Procédé selon l'une des revendications 15 à 21, **caractérisé en ce que** l'enregistrement du code d'identification, la retransmission et la vérification du code d'autorisation, l'envoi de la confirmation d'autorisation et/ou la compensation du paiement auprès de l'accepteur, s'effectuent automatiquement.

23. Procédé selon l'une des revendications 15 à 22, **caractérisé en ce que** grâce à une dernière modification du statut à réaliser par l'accepteur, on confirme l'encaissement du support de moyen de paiement de substitution et bloque un nouvel encaissement.

24. Procédé selon la revendication 17 ou les revendications 19 à 23, **caractérisé en ce qu'**une condition préalable à une modification du statut à réaliser par le client, des collaborateurs ou l'organisme preneur, consiste en une entrée de fonds pour les moyens de paiement de substitution émis chez l'émetteur.

25. Système de paiement ou procédé selon l'une des revendications 1 à 24, **caractérisé en ce que** le transfert des données avec le dispositif de stockage des données est réalisé via Internet ou via téléphone, l'entrée et la sortie des données et l'autorisation s'effectuant automatiquement grâce à des ordinateurs à commande vocale ou par clavier, des SMS ou similaires, ou en faisant appel à des centres d'appel ou similaires.

26. Système de paiement ou procédé selon l'une des revendications 1 à 25, **caractérisé en ce que** les codes d'identification et les codes à numéros d'identification sont attribués en fonction d'un algorithme codé.

27. Système de paiement ou procédé selon l'une des revendications 1 à 26, **caractérisé en ce que** le code d'autorisation est attribué en fonction d'un algorithme codé.
